# DEMANDE DE BREVET EUROPEEN

(11) **EP 0 737 603 A1**
(43) Date de publication de la demande: **16.10.1996**
(21) Numéro de dépôt: 96400790.0
(22) Date de dépôt: 12.04.1996
(51) Int. Cl.: B60R 13/10

(54) **Procédé et dispositif pour l'identification de véhicules automobiles**

(30) Priorité: 14.04.1995 FR 9504543
(71) Demandeur: SOCIETE FINANCIERE ICA, 92100 Boulogne Billancourt (FR)
(72) Inventeur: Maurice, Henry, 92100 Boulogne Billancourt (FR)
(74) Mandataire: Dawidowicz, Armand

(57) **Abrégé**

L'invention concerne un procédé pour l'identification de véhicules automobiles.

L'invention consiste en ce qu'on équipe le véhicule d'une plaquette électronique sans alimentation électrique du type permettant l'inscription d'informations dont la lecture peut être faite par l'émission d'ondes de lecture, par exemple électromagnétiques, qui produisent l'émission par la plaquette d'un signal contenant lesdites informations, on inscrit préalablement ou ultérieurement dans ladite plaquette une information concernant le véhicule, par exemple le numéro de série, et on surveille les véhicules au moyen d'un émetteur desdites ondes de lecture et d'un lecteur agencé pour lire les signaux émis par les plaquettes.

Application à l'identification de véhicules automobiles.

## Description

La présente invention concerne le domaine de la lutte contre le vol des véhicules automobiles.

Le vol des véhicules automobiles est devenu un problème important, en particulier pour les compagnies d'assurances qui doivent rembourser aux propriétaires la valeur du véhicule assuré, après un délai déterminé suivant la déclaration du vol. En effet, les mesures préventives, telles que les antivols mécaniques, électromécaniques ou électroniques, ne sont pas suffisantes pour arrêter les vols, que ce soit par des professionnels qui acheminent rapidement les voitures volées vers certains pays demandeurs ou par des voleurs occasionnels qui utilisent le véhicule pour une courte durée et l'abandonnent ensuite. Il en est bien sûr de même pour les véhicules abandonnés par leurs propriétaires en vue d'une escroquerie à l'assurance.

La reconnaissance de tels véhicules réellement volés ou volontairement abandonnés se fait par la lecture des plaques d'immatriculation au hasard de contrôles de police.

Ces contrôles sont la plupart du temps inopérants du fait d'un changement des plaques d'immatriculation, dans le cas des voleurs professionnels, et de la courte durée de circulation dans le cas des voleurs occasionnels et des escrocs à l'assurance.

On connaît par le brevet US A-4 368979 un dispositif d'identification d'un véhicule constitué par la présence d'un hologramme prévu sur le véhicule, en particulier au niveau de la plaque d'immatriculation. Cet hologramme est lisible uniquement à l'aide d'un lecteur à infra-rouges. Cependant la falsification de l'hologramme peut être en particulier réalisée par le changement complet des plaques.

Par le brevet WO-A-9213737, on propose un dispositif d'identification constitué de deux plaques d'identification situées sur le véhicule et reliées à un ordinateur de bord comportant un lecteur de données. Le codage de ce lecteur, en accord avec les données relatives au véhicule, est réalisable à partir d'un ordinateur central permettant de modifier, lire, etc... les données. Ce codage est nécessaire pour rendre lisibles les plaques d'identification par affichage des données, l'ordinateur de bord actionnant lesdites plaques lorsqu'il a reconnu et lu une carte magnétique utilisée par le propriétaire du véhicule.

Bien que ce dispositif se révèle satisfaisant dans la mesure où, un utilisateur non autorisé, c'est-à-dire ne possédant pas la carte magnétique appropriée, est repérable tout de suite, ce dispositif peut se révéler contraignant pour le propriétaire du véhicule qui doit toujours avoir sur lui ladite carte magnétique. En outre, l'existence d'une carte magnétique peut également entraîner des risques de falsification (copie etc...) de ladite carte.

Il est donc souhaitable de développer un système d'identification des véhicules automobiles qui puisse être mis en oeuvre très rapidement après une déclaration de vol et qui puisse être exploité aisément en dehors de la force publique.

A cet effet, un premier objet de l'invention est un procédé pour l'identification de véhicules automobiles, caractérisé en ce qu'on équipe le véhicule d'une plaquette électronique sans alimentation électrique du type permettant l'inscription d'informations dont la lecture peut être faite par l'émission d'ondes de lecture, par exemple électromagnétiques, qui produisent l'émission par la plaquette d'un signal contenant lesdites informations, on inscrit préalablement ou ultérieurement dans ladite plaquette une information concernant le véhicule, par exemple le numéro de série, et on surveille les véhicules au moyen d'un émetteur desdites ondes de lecture et d'un lecteur agencé pour lire les signaux émis par les plaquettes.

Une telle plaquette électronique est par exemple connue par US-A-3.299.424 ou FR-A-2.393.372.

Bien entendu, la plaquette est disposée à un emplacement variable et/ou peu accessible de manière à éviter son démontage. De même, les moyens d'inscription des informations doivent être réservés aux personnes autorisées, en particulier les employés ou délégués des compagnies d'assurance.

De préférence, ladite information concernant le véhicule est bloquée électroniquement dans une zone de la plaquette, afin d'interdire sa modification par des personnes en possession des moyens d'inscription.

Avantageusement, on inscrit également dans ladite plaquette des informations modifiables, par exemple le numéro d'immatriculation et/ou le nom de la compagnie d'assurance. La comparaison du numéro d'immatriculation inscrit dans la plaquette avec celui figurant sur les plaques d'immatriculation permet de détecter immédiatement une anomalie. De préférence, l'inscription est faite par des moyens non accessibles au public afin de renforcer la sécurité du système.

Un second objet de l'invention est un dispositif pour la mise en oeuvre du procédé précédent, caractérisé en ce qu'il comprend une plaquette électronique sans alimentation électrique du type permettant l'inscription d'informations dont la lecture peut être faite par l'émission d'ondes de lecture, par exemple électromagnétiques, qui produisent l'émission par la plaquette d'un signal contenant lesdites informations, des moyens d'inscription d'informations dans ladite plaquette, des moyens d'émission d'ondes de lecture et des moyens de lecture du signal émis par la plaquette.

De préférence, les moyens d'émission d'ondes de lecture et les moyens de lecture du signal émis par la plaquette sont combinés en un appareil de lecture. Selon une forme de réalisation de l'invention, ledit appareil de lecture est portable et affecte la forme d'un pistolet de lecture. Il est ainsi aisé, pour des auxiliaires des compagnies d'assurances et/ou d'une société de surveillance, de lire les informations concernant un véhicule suspect. L'auxiliaire peut ainsi détecter une anomalie quant à l'immatriculation visible d'un véhicule et la transmettre à son employeur. Il peut agir de même dans le cadre d'une comparaison de l'information concernant le véhicule suspect avec une liste des informations correspondantes relatives aux véhicules déclarés volés.

Selon une variante de l'invention, le dispositif de lecture est fixe, par exemple fixé sur un portique enjambant une route, et est relié à une centrale de surveillance, de préférence par ondes radio. La détection d'une information concernant un véhicule passant sous le lecteur et fiché comme volé entraîne immédiatement l'émission d'un message à la centrale de surveillance, laquelle peut signaler le passage du véhicule suspect aux autorités de police ou de gendarmerie.

De préférence, l'appareil de lecture comprend une mémoire dans laquelle peuvent être inscrits les numéros de série des véhicules déclarés volés, des moyens de comparaison d'un numéro de série lu par l'appareil avec le contenu de ladite mémoire et un moyen d'émission d'un signal d'alarme en cas de concordance. Avantageusement, l'appareil de lecture est adapté à un téléchargement de ladite mémoire.

Le système d'identification selon l'invention permet une lutte efficace contre le vol des véhicules avec des moyens très économiques. En effet, le prix des plaquettes est peu élevé et seuls les moyens d'écriture et les moyens d'émission-lecture sont relativement onéreux mais sont amortis par le nombre de plaquettes posées et par les économies réalisées par les compagnies d'assurances.

## Revendications

1. Procédé pour l'identification de véhicules automobiles,
caractérisé en ce qu'on équipe le véhicule d'une plaquette électronique sans alimentation électrique du type permettant l'inscription d'informations dont la lecture peut être faite par l'émission d'ondes de lecture, par exemple électromagnétiques, qui produisent l'émission par la plaquette d'un signal contenant lesdites informations, on inscrit préalablement ou ultérieurement dans ladite plaquette une information concernant le véhicule, par exemple le numéro de série, et on surveille les véhicules au moyen d'un émetteur desdites ondes de lecture et d'un lecteur agencé pour lire les signaux émis par les plaquettes.

2. Procédé d'identification selon la revendication 1,
caractérisé en ce que ladite information concernant le véhicule est bloquée électroniquement dans une zone de la plaquette.

3. Procédé d'identification selon la revendication 2,
caractérisé en ce qu'on inscrit également dans ladite plaquette des informations modifiables, par exemple le numéro d'immatriculation et/ou le nom de la compagnie d'assurance.

4. Dispositif pour la mise en oeuvre du procédé selon l'une des revendications 1 à 3,
caractérisé en ce qu'il comprend une plaquette électronique sans alimentation électrique du type permettant l'inscription d'informations dont la lecture peut être faite par l'émission d'ondes de lecture, par exemple électromagnétiques, qui produisent l'émission par la plaquette d'un signal contenant lesdites informations, des moyens d'inscription d'informations dans ladite plaquette, des moyens d'émission d'ondes de lecture et des moyens de lecture du signal émis par la plaquette.

5. Dispositif selon la revendication 4,
caractérisé en ce que les moyens d'émission d'ondes de lecture et les moyens de lecture du signal émis par la plaquette sont combinés en un appareil de lecture.

6. Dispositif selon la revendication 5,
caractérisé en ce que ledit appareil de lecture est portable et affecte la forme d'un pistolet de lecture.

7. Dispositif selon l'une des revendications 5 et 6,
caractérisé en ce que ledit appareil de lecture comprend une mémoire dans laquelle peuvent être inscrits les numéros de série des véhicules déclarés volés, des moyens de comparaison d'un numéro de série lu par l'appareil avec le contenu de ladite mémoire et un moyen d'émission d'un signal d'alarme en cas de concordance.

8. Dispositif selon la revendication 7,
caractérisé en ce que ledit appareil de lecture est adapté à un téléchargement de ladite mémoire.

9. Dispositif selon la revendication 5,
caractérisé en ce que le dispositif de lecture est fixe, par exemple fixé sur un portique enjambant une route, et est relié à une centrale de surveillance, de préférence par ondes radio.
